Europäisches Patentamt

(19) European Patent Office

Office européen des brevets

(11) Numéro de publication : **0 196 969
B1**

(12) **FASCICULE DE BREVET EUROPÉEN**

(45) Date de publication du fascicule du brevet :
**19.10.88**

(21) Numéro de dépôt : **86400640.8**

(22) Date de dépôt : **26.03.86**

(51) Int. Cl.⁴ : **B 27 B 21/00**, B 23 D 49/12,
B 25 F 1/02

(54) **Outil à fonctions multiples, apte notamment au perçage et au découpage.**

(30) Priorité : **27.03.85 FR 8504563**

(43) Date de publication de la demande :
**08.10.86 Bulletin 86/41**

(45) Mention de la délivrance du brevet :
**19.10.88 Bulletin 88/42**

(84) Etats contractants désignés :
**AT BE CH DE GB IT LI NL**

(56) Documents cités :
**AU-B- 506 839
CH-A- 90 360
FR-A- 420 016
FR-A- 828 646
US-A- 2 142 750
US-A- 2 769 469**

(73) Titulaire : **TOMECANIC, Société Anonyme:
27, avenue Charles-de-Gaulle
F-78410 Aubergenville (FR)**

(72) Inventeur : **Pourtau, Jean-Jacques
22, Avenue de Wailly
F-78290 Croissy-sur-Seine (FR)**
Inventeur : **Thiriet, Abel Robert
117, rue du Val d'Amour
F-39100 Dole (FR)**

(74) Mandataire : **Hoisnard, Jean-Claude et al
Cabinet Beau de Lomenie 55, rue d'Amsterdam
F-75008 Paris (FR)**

## Description

On connaît déjà de petits outils à fonctions multiples permettant, sur un chantier, de percer un panneau en faïence, en terre cuite ou en céramique et, à partir du trou de perçage réalisé, de faire une découpe désirée.

C'est ainsi qu'existe déjà un outil à fonctions multiples, destiné à réaliser d'abord le perçage d'un trou dans un panneau, ensuite une découpe dudit panneau à partir dudit trou, en étant constitué à cet effet par :

- une armature ayant une forme générale de U à deux branches reliées par une barre de liaison, dont une première branche est prolongée, vers l'extérieur, par un appendice parallèle à ladite barre et terminé par un outil de perçage,

- un ensemble de poignée, qui s'étend vers l'extérieur du U de l'armature, à partir de l'extrémité de la deuxième branche, parallèlement à la barre du U, et qui comporte une poignée susceptible d'être sélectivement, soit rendue solidaire de l'armature, soit montée rotative sur cette armature parallèlement à la barre du U, au moyen d'un dispositif de blocage à vis, et,

- un outil de découpage longiforme, tel qu'une lame de scie, ayant deux extrémités munies d'yeux susceptibles d'être fixées de manière amovible aux extrémités des deux branches du U.

Ce type d'outil donne toute satisfaction, ne présentant qu'un seul inconvénient : sa réalisation industriellement très soignée conduit à un prix de revient relativement élevé.

L'invention a pour but de proposer un outil conforme au même principe, mais de fabrication simplifiée, ce qui conduit, tout en conservant les avantages de l'outil connu, à pouvoir le fabriquer à un prix compétitif.

Selon l'invention, l'ensemble de poignée comprend une tige droite distincte de l'armature, dont une extrémité, d'une part est filetée, d'autre part est munie d'un épaulement, cependant qu'au voisinage de son extrémité, la deuxième branche du U est munie d'un trou traversant que l'extrémité filetée de ladite tige est susceptible de traverser jusqu'à mise en contact dudit épaulement sur la deuxième branche du U de l'armature, et qu'un écrou, de préférence du type papillon, est susceptible de coopérer avec ladite extrémité filetée de la tige pour maintenir en position ladite tige sur l'armature et, sélectivement, l'immobiliser sur cette armature.

Les avantageuses dispositions suivantes sont, par ailleurs, de préférence adoptées :

- un tronçon de l'extrémité de la tige, qui s'étend entre l'épaulement et le filetage de cette extrémité, est lisse ;

- sensiblement dans la zone des extrémités des branches du U de l'armature, sont fixés deux ergots disposés dans un plan perpendiculaire au plan du U et sensiblement parallèle à la barre dudit U, ces deux ergots divergeant en s'écartant desdites branches du U, en ayant un écartement, dans la configuration de non montage de l'outil de découpage sur l'armature, supérieur à l'écartement des deux yeux de fixation dudit outil de découpage, le U de l'armature présentant en outre une élasticité permettant, par déformation élastique, le montage des deuxdits yeux sur les deuxdits ergots.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

- la figure 1 est une vue en élévation d'un outil à fonctions multiples conforme à l'invention, en configuration « monté », prêt à être utilisé ;

- la figure 2 est une vue de l'outil de la figure 1, dans la configuration « démonté » ; et,

- la figure 3 est une coupe suivant III-III de la figure 2.

L'outil à fonctions multiples représenté est constitué par :

- une armature 1 en forme générale de U, ayant une première branche 2 et une deuxième branche 3, dans l'exemple représenté parallèles, reliées par une barre de liaison 4 sensiblement perpendiculaire auxdites branches 2 et 3, cette armature étant réalisée à partir d'un profilé de section circulaire et coudé ;

- un appendice 5, qui constitue un prolongement de la première branche 2, s'étend parallèlement à la barre de liaison 4, vers l'extérieur du U et porte à son extrémité libre une pointe de perçage 6 ;

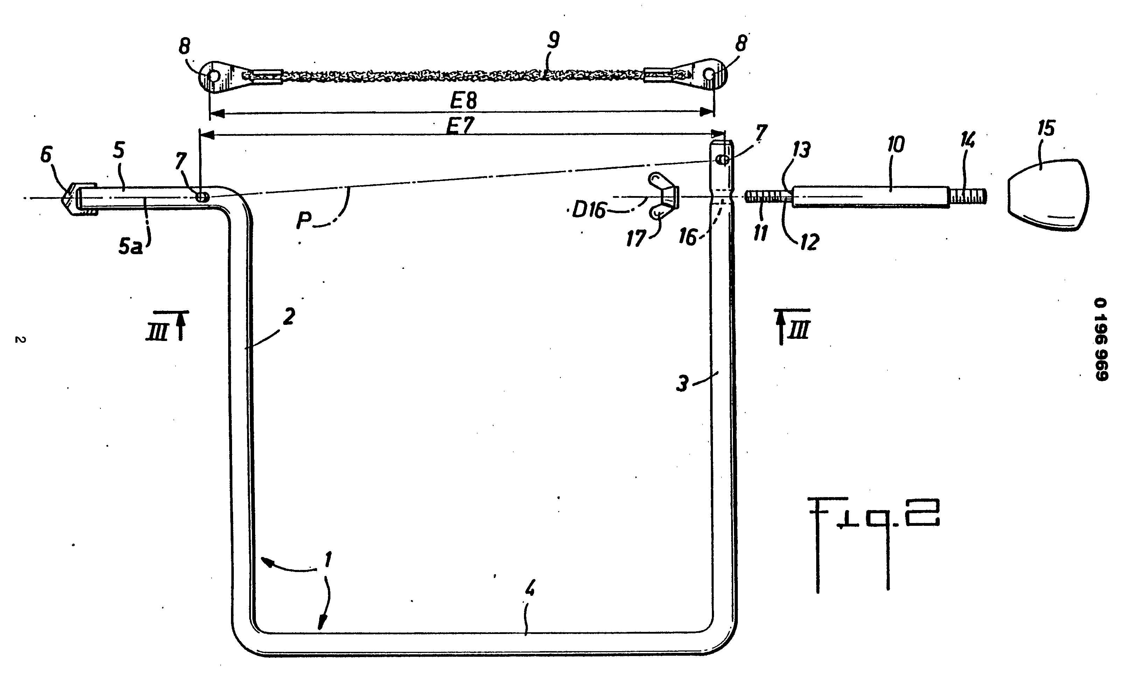

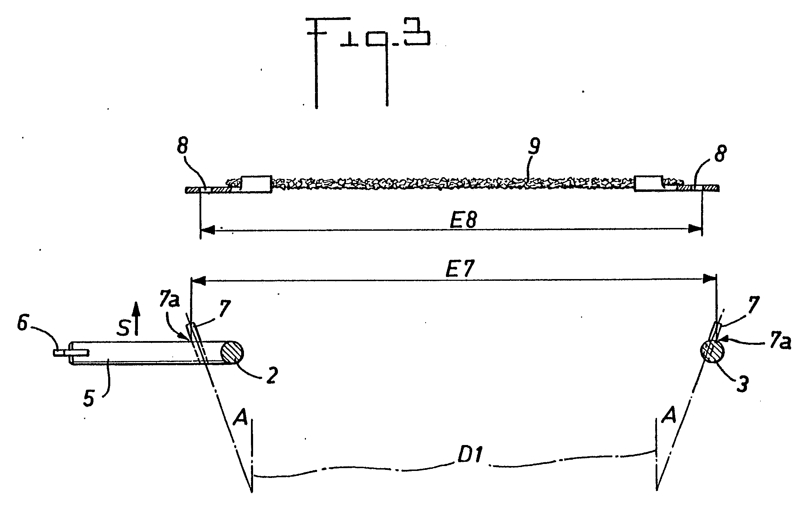

- deux ergots 7, qui sont disposés à proximité, l'un, du coude raccordant l'appendice 5 à la première branche 2, l'autre, de l'extrémité de la deuxième branche 3 ; qui sont contenus dans un plan P perpendiculaire au plan du U (c'est-à-dire au plan de la figure 2) et sensiblement parallèle à la barre de liaison 4 ; qui font un angle A par rapport à la direction D1 perpendiculaire au plan de l'armature 1, en divergeant l'un par rapport à l'autre d'un angle 2A dans le sens S d'éloignement desdites branches 2 et 3 ; et dont l'écartement E7, mesuré à la base des faces 7a des deux ergots les plus éloignées l'une de l'autre et de leur raccordement avec l'appendice 5 et la branche 3, respectivement, est supérieur, lorsqu'aucun outil n'est monté aux extrémités des branches 2 et 3 (figures 2 et 3), à l'écartement maximal E8 des yeux de fixation 8 d'un outil 9 susceptible d'être monté sur l'armature 1 ;

- une tige droite 10, dont une extrémité est munie d'abord d'un filetage 11, ensuite d'un palier lisse 12 délimité axialement par un épaulement 13, et dont l'autre extrémité comporte un filetage 14 de fixation d'une poignée 15 ;

- un trou traversant 16, qui traverse l'extrémité de la deuxième branche 3 du U suivant une direction D 16 parallèle à la barre de liaison 4 du U ;

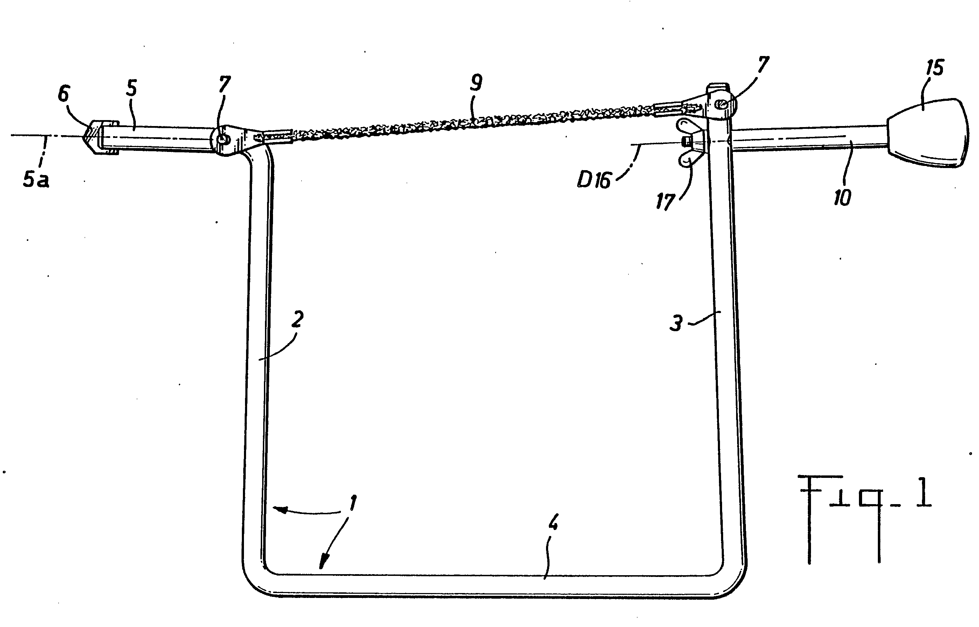

- un écrou papillon 17 susceptible d'être vissé sur le filetage 11 de la tige 10, notamment lorsque l'extrémité correspondante de cette tige 10 traverse le trou 16 (figure 1) et qu'alors le palier lisse 12 est en appui sur les parois délimitant l'intérieur dudit trou 16.

Les dispositions suivantes doivent être notées :
- l'armature en U est, bien entendu, rigide, mais les extrémités de ses branches 2 et 3, et par conséquent les ergots 7 qu'elles portent, sont susceptibles d'être rapprochées par déformation élastique de l'armature, afin de permettre l'introduction des ergots 7 dans les yeux 8 de l'outil 9 ;
- cet outil 9 est, dans l'exemple représenté, constitué par une scie filiforme ;
- la tige 10 peut être, soit seulement maintenue en place à l'extrémité de la deuxième branche 3, l'écrou papillon 17 ne la bloquant pas en position, et, cette tige pouvant alors tourner librement autour de l'axe du trou 16 (direction D 16), soit être entièrement immobilisée par rapport à ladite deuxième tige 3 au moyen de l'écrou papillon 17, alors complètement serré sur ladite deuxième branche 3.

L'utilisation de l'outil à fonctions multiples qui vient d'être décrit est simple.

Lorsqu'un découpage doit être réalisé à l'intérieur de la surface d'un panneau, tel qu'un carreau de faïence par exemple, l'utilisateur monte la tige 10 sur la deuxième branche 3 de manière à en permettre la rotation libre autour de l'axe du trou 16. La scie 9 n'étant pas encore montée, et l'axe du trou 16 coïncidant sensiblement avec l'axe de l'appendice 5, l'armature constitue une manivelle et permet, par rotation autour de l'axe 5a de l'appendice 5, de réaliser le perçage d'un trou à l'intérieur de la découpe devant être réalisée dans le panneau.

Ce trou étant réalisé, et permettant le passage de la scie filiforme 9, cette scie est effectivement introduite dans le trou, puis, par déformation élastique, les extrémités des branches 2 et 3 sont rapprochées jusqu'à ce que les ergots 7 puissent pénétrer dans les yeux 8 de la scie 9. Le simple fait de relâcher les extrémités des branches de l'armature suffit, compte tenu de l'implantation des ergots 7, à réaliser le montage de la scie 9 sur l'armature 1. L'utilisateur, en serrant l'écrou papillon 17, bloque la tige 10 et la poignée 15 par rapport à l'armature 1 et possède alors l'équivalent d'une scie classique, apte à réaliser la découpe choisie.

Il convient de noter la simplicité de la conception, dans laquelle, d'une part, la fixation de la scie sur l'armature ne fait appel à aucun constituant coûteux (vis, écrou) ni amovible, donc présentant le risque d'être égaré, d'autre part, la poignée est très simple, bien qu'amovible entièrement et ne nécessite la réalisation d'aucune gorge dans un support lié à l'armature, ne faisant appel pour son montage qu'à un simple trou ménagé dans l'extrémité de la deuxième branche 3.

**Revendications**

1. Outil à fonctions multiples, destiné à réaliser d'abord le perçage d'un trou dans un panneau, ensuite une découpe dudit panneau à partir dudit trou, en étant constitué à cet effet par :
- une armature (1) ayant une forme générale de U à deux branches (2 et 3) reliées par une barre de liaison (4), dont une première branche (2) est prolongée, vers l'extérieur, par un appendice (5) parallèle à ladite barre (4) et terminé par un outil de perçage (6),
- un ensemble de poignée (10-15-17), qui s'étend vers l'extérieur du U de l'armature (1), à partir de l'extrémité de la deuxième branche (3), parallèlement (D16) à la barre (4) du U, et qui comporte une poignée (15) susceptible d'être sélectivement (17), soit rendue solidaire de l'armature, soit montée rotative sur cette armature parallèlement à la barre du U, au moyen d'un dispositif (17-11) de blocage à vis, et,
- un outil de découpage (9) longiforme, tel qu'une lame de scie, ayant deux extrémités munies d'yeux (8) susceptibles d'être fixées de manière amovible aux extrémités des deux branches (2 et 3) du U, caractérisé en ce que l'ensemble de poignée comprend une tige droite (10) distincte de l'armature, dont une extrémité, d'une part est filetée (11), d'autre part est munie d'un épaulement (13), cependant qu'au voisinage de son extrémité, la deuxième branche (3) du U est munie d'un trou traversant (16) que l'extrémité filetée (11) de ladite tige est susceptible de traverser jusqu'à mise en contact dudit épaulement (13) sur la deuxième branche (3) du U de l'armature, et qu'un écrou (17), de préférence du type papillon, est susceptible de coopérer avec ladite extrémité filetée (11) de la tige (10) pour maintenir en position ladite tige sur l'armature et, sélectivement, l'immobiliser sur cette armature.

2. Outil à fonctions multiples selon la revendication 1, caractérisé en ce qu'un tronçon (12) de l'extrémité de la tige, qui s'étend entre l'épaulement (13) et le filetage (11) de cette extrémité, est lisse.

3. Outil à fonctions multiples selon l'une quelconque des revendications 1 et 2, caractérisé en ce que sensiblement dans la zone des extrémités des branches (2 et 3) du U de l'armature, sont fixés deux ergots (7) disposés dans un plan (P) perpendiculaire au plan du U et sensiblement parallèle à la barre (4) dudit U, ces deux ergots (7) divergeant (2A) en s'écartant (S) desdites branches (2 et 3) du U, en ayant un écartement (E7), dans la configuration de non montage de l'outil de découpage (9) sur l'armature (1), supérieur à l'écartement (E8) des deux yeux (8) de fixation dudit outil de découpage (9), le U de l'armature présentant en outre une élasticité permettant, par déformation élastique, le montage des deuxdits yeux (8) sur les deuxdits ergots (7).

**Claims**

1. Multi-purpose tool for first drilling a hole in a panel, and then cutting a piece from said panel, starting from said hole, of the type comprising :
- a U-shaped frame (1) with two branches (2 and 3) joined together by a connecting bar (4) of which a first branch (2) is extended outwardly by an appendix (5), parallel to said connecting bar (4) and provided at its end with a drilling tool (6),
- a handle assembly (10-15-17), extending outwardly, from the end of the second branch of the U-frame (1) and parallely (D16) to the base (4) of the U, said assembly comprising a handle (15) adapted to be selectively (17), either part of the frame, or pivotally mounted thereon parallely to the bar of the U, via a screw-type locking device (17-11), and
- an elongated cutting tool (9), such as a saw blade, with two ends provided with holes (8) adapted to be removably fixed on the ends of the two branches (2 and 3) of the U-frame, characterized in that said handle assembly comprises a straight rod (10) separate from the frame, of which one end is threaded (11), on the one hand, and provided, on the other hand, with a shoulder part (13), whereas close to its end, the second branch (3) of the U-frame is provided with a through-hole (16) which the threaded end (11) of the rod can traverse in order to bring said shoulder part (13) in contact with the second branch (3) of the U-frame, and that a nut (17), of preferably butterfly type, is adapted to cooperate with said threaded end (11) of the rod (10) in order to hold said rod in position on the frame and, selectively, lock it thereon.

2. Multi-purpose tool according to claim 1, characterized in that a portion (12) of the end of the rod, which extends between the shoulder part (13) and the threaded part (11) of said end, is smooth.

3. Multi-purpose tool according to any one of claims 1 and 2, characterized substantially in the area of the ends of the branches (2 and 3) of the U-frame, are fixed two studs (7) situated in a plane (P) perpendicular to the plane of the U-shape, and substantially parallel to the bar (4) of said U-shape, said two studs (7) being divergent (2A) by extending away (S) from said branches (2 and 3) of the U-shape, with a distance (E7) between them, in the configuration where the cutting tool (9) is dismounted from the frame (1), being greater than the distance (E8) between the two holes (8) for fixing the cutting tool (9), the U-shape of the frame being also resilient, so as to permit, by elastic deformation, mounting of the holes (8) on said two studs (7).

## Patentansprüche

1. Mehrzweckwerkzeug zur Durchführung zuerst einer Bohrung eines Lochs in eine Platte, danach eines Zuschnitts der Platte, ausgehend von diesem Loch, welches zu diesem Zweck gebildet ist durch :
- einen Bügel (1) von im allgemeinen U-förmiger Gestalt mit zwei Schenkeln (2 und 3), die durch einen Verbindungsstab (4) verbunden sind, wobei ein erster Schenkel (2) nach außen hin durch einen zum Stab (4) parallelen und in einem Bohrwerkzeug (6) endenden Fortsatz (5) verlängert ist,
- eine Feststellgruppe (10-15-17), die sich vom Ende des zweiten Schenkels (3) parallel (D16) zum Stab (4) des U nach außerhalb des U des Bügels erstreckt und einen Griff (15) umfaßt, der selektiv (17) entweder mit dem Bügel verbindbar ist oder auf diesem Bügel parallel zur Stange des U mittels einer Blockiereinrichtung (17-11) mit Schraube drehbar montiert ist, und
- ein längliches Schneidwerkzeug (9), wie ein Sägeblatt, das zwei mit Ösen (8) versehene Enden hat, die auf abnehmbare Weise an den Enden der beiden Schenkeln (2 und 3) des U befestigbar sind, dadurch gekennzeichnet, daß die Feststellgruppe eine vom Bügel getrennte gerade Stange (10) umfaßt, deren eines Ende einerseits mit einem Gewinde (11) versehen, anderseits mit einer Schulter (13) ausgestattet ist, wobei der zweite Schenkel (3) des U nahe seinem Ende mit einem durchgehenden Loch (16) versehen ist, durch welches das Gewindeende (11) der Stange bis zur Berührung der Schulter (13) am zweiten Schenkel (3) des U des Bügels hindurchgehen kann, und daß eine Mutter (17), vorzugsweise des Flügelmuttertyps, mit dem Gewindeende (11) der Stange (10) zum Halten der Stange in Position auf dem Bügel und zum wahlweisen Fixieren dieses Bügels zusammenwirken kann.

2. Mehrzweckwerkzeug nach Anspruch 1, dadurch gekennzeichnet, daß ein Stumpf (12) des Endes der Stange, der sich zwischen der Schulter (13) und dem Gewinde (11) dieses Endes erstreckt, glatt ist.

3. Mehrzweckwerkzeug nach einem der Ansprüche 1 und 2, dadurch gekennzeichnet, daß im wesentlichen im Bereich der Enden der Schenkeln (2 und 3) des U des Bügels zwei in einer senkrecht zur Ebene des U und im wesentlichen parallel zum Stab (4) des U verlaufenden Ebene (P) angeordnete Dorne (7) befestigt sind, wobei diese beiden Dorne (7) divergieren (2A), indem sie sich von den Schenkeln (2 und 3) des U in einem Abstand (S) befinden und in der nicht montierten Konfiguration des Schneidwerkzeugs (9) auf dem Bügel (1) einen Abstand (E7) aufweisen, der größer als der Abstand (E8) der beiden Befestigungsösen (8) des Schneidwerkzeugs (9) ist, wobei das U des Bügels weiters eine Elastizität aufweist, die durch elastische Verformung die Montage der beiden Ösen (8) an den beiden Dornen (7) gestattet.

Fig-1

Fig. 2

0 196 969

Fig.3